# EUROPÄISCHE PATENTANMELDUNG

(11) **EP 0 648 519 A2**
(43) Veröffentlichungstag der Anmeldung: **19.04.1995**
(21) Anmeldenummer: 94810533.3
(22) Anmeldetag: 15.09.1994
(51) Int. Cl.: B01D 3/08, B01L 7/02

(54) **Verdampfer-Kolben für einen Rotationsverdampfer**

(30) Priorität: 14.10.1993 DE 9315698 U
(71) Anmelder: Büchi Labortechnik AG, CH-9230 Flawil (CH)
(72) Erfinder: Spring, Arthur, CH-9230 Flawil (CH)
(74) Vertreter: Hepp, Dieter

(57) **Zusammenfassung**

Ein Verdampfer-Kolben (5) für einen Rotationsverdampfer (1) besteht aus einem Deckel-Teil (5b) und einem Becher-Teil (5a). Zur Verbindung ist ein Verbindungselement (12) vorgesehen. Im Becher-Teil (5a) ist eine Einrichtung (16, 17, 18) zum mechanischen Beeinflussen des Füllguts im Becher-Teil (5a) angeordnet.

## Beschreibung

Die Erfindung betrifft einen Verdampfer-Kolben für einen Rotationsverdampfer gemäss Oberbegriff von Anspruch 1. Derartige Rotationsverdampfer sind in Vielzahl bekannt und gebräuchlich. So zeigt z.B. die DE-A-25 34 446 einen solchen Rotationsverdampfer mit einem Dampfführungs-Rohr zur Durchleitung des Dampfes durch eine Halte- und Antriebseinrichtung. Die Halte- und Antriebseinrichtung trägt den Kolben und überträgt die Rotationsbewegung. Da der Kühler oder Kondensator stationär angeordnet ist, der Kolben dagegen rotiert, ist eine Wellendichtung mit einer Dichtlippe vorgesehen, die am Dampfführungs-Rohr angreift.

Die EP-A1-504 099 zeigt eine vergleichbare Anordnung mit zweiteiligem Führungsrohr.

Bei Rotationsverdampfern kommen praktisch ausschliesslich Rundkolben oder birnenförmige Verdampfer-Kolben zum Einsatz. Im Hinblick auf den im Kolben herrschenden Unterdruck, die mechanische Beanspruchung durch die frei auskragende, schräge Anflanschung und im Hinblick auf gute Dünnschicht-Bildung, werden derartige Rundkolben oder birnenförmige Kolben vom Fachmann als einzige Alternativen für den Einsatz im Zusammenhang mit Rotationsverdampfern betrachtet. Die durch die Geometrie von rund- oder birnenförmigen Kolben bedingten Nachteile, wie z.B. schwierige Reinigung und grosse Überschäum-Gefahr, werden seit Jahrzehnten als unvermeidlich in Kauf genommen.

Der Erfindung liegt die Aufgabe zugrunde, Verdampfer-Kolben dieser Art zu verbessern und insbesondere Einsatz- und Gebrauchseigenschaft zu optimieren.

Erfindungsgemäss wird dies in erster Linie gemäss Kennzeichen von Anspruch 1 erreicht. Auf optimal einfache Weise wird durch die zweiteilige Ausbildung des Kolbens erreicht, dass der Becher-Teil nach Lösen des Deckel-Teils frei zugänglich ist. Dadurch lassen sich auch pastöse oder pulverförmige Produkte einfach einfüllen oder entfernen. Dies gilt auch für verklebte oder verkrustete Rückstände. Dabei kann z.B. auch der Deckel-Teil an der Antriebseinrichtung befestigt bleiben und nur der Becher-Teil zur Materialentnahme oder zur Füllung abgenommen werden. Damit lässt sich die Bedienung nicht nur vereinfachen, sondern auch beschleunigen.

Durch die etwa zylindrische Ausbildung des Becher-Teils wird guter Zugang von der Öffnung her einerseits sowie eine wünschbare Oberflächenvergrösserung und eine Reduzierung der Überschäum-Neigung andererseits auf einfachste Weise erreicht.

Unter "etwa zylindrisch" sind dabei Querschnittsformen zu verstehen, bei denen die Behälterwand rohrförmig und zylindrisch verläuft oder aber auch leicht konisch nach innen oder nach aussen geneigt ist, ohne dass dabei der Becher-Charakter des Kolbens verlassen wird.

Ersichtlicherweise erlaubt die zylindrische Ausbildung des Becher-Teils auch ein Einführen von Sensoren oder mechanischen Manipulatoren für das Füllgut. Z.B. können Schaber zum kontinuierlichen Abstreifen oder Verstreichen des Füllguts eingebracht werden. Auch Rührwerke oder Mischanordnungen können vorgesehen werden. Auch Kombinationen derartiger Manipulatoren, wie z.B. Schaber und Rührwerk als Einheit, lassen sich anbringen. Zum Entnehmen des Füllguts muss dabei lediglich der Becher-Teil vom Deckel-Teil gelöst werden und der Manipulator kann durch die Becheröffnung herausgenommen werden.

Der Deckel-Teil selbst lässt sich dabei einfach so aufbauen, dass er einen ersten Flansch zur Befestigung an der Halte- und Antriebseinrichtung sowie einen zweiten Flansch zur Verbindung mit dem Becher-Teil aufweist.

Um Passungstoleranzen zu überbrücken und Dichtigkeit auch bei niedrigen Drucken zu gewährleisten ist es zweckmässig, wenn zwischen dem Deckel-Teil und dem Becher-Teil ein Dichtungselement angeordnet ist. Das Deckel-Teil kann durch ein Verbindungselement, z.B. einen Schraubring oder Spannelemente, mit dem Becher-Teil unter Vorspannung verbunden werden, so dass zuverlässige Abdichtung gewährleistet wird. Es ist auch denkbar, den Deckel-Teil mit einem zylindrischen Flansch auszubilden, der mit einem Dicht-Sitz in die Öffnung des Becher-Teils eingreift und den Becher-Teil beim Anlegen des Vakuums "ansaugt", ohne dass ein separates Verbindungselement erforderlich wäre. Wenn im Becher-Teil eine Anordnung zum mechanischen Beeinflussen des Füllguts vorgesehen ist, kann dieses zweckmässig an einer Halterung befestigt werden, die am stationären Teil des Dampfführungs-Rohrs befestigt wird. Dazu ist es zweckmässig, wenn die Halterung vom Dampfführungs-Rohr umgeben ist.

Die Erfindung ist im folgenden in Ausführungsbeispielen anhand der Zeichnungen näher erläutert. Es zeigen:
- Figur 1: Die schematische Darstellung eines Verdampfer-Kolbens mit den Merkmalen der Erfindung,
- Figur 2: einen konventionellen Aufbau eines Rotationsverdampfers mit einem Rundkolben,
- Figur 3: den Verdampfer-Kolben gemäss Figur 1 in vergrössertem Massstab, und
- Figur 4: ein abgewandeltes Ausführungsbeispiel eines Verdampfer-Kolbens.

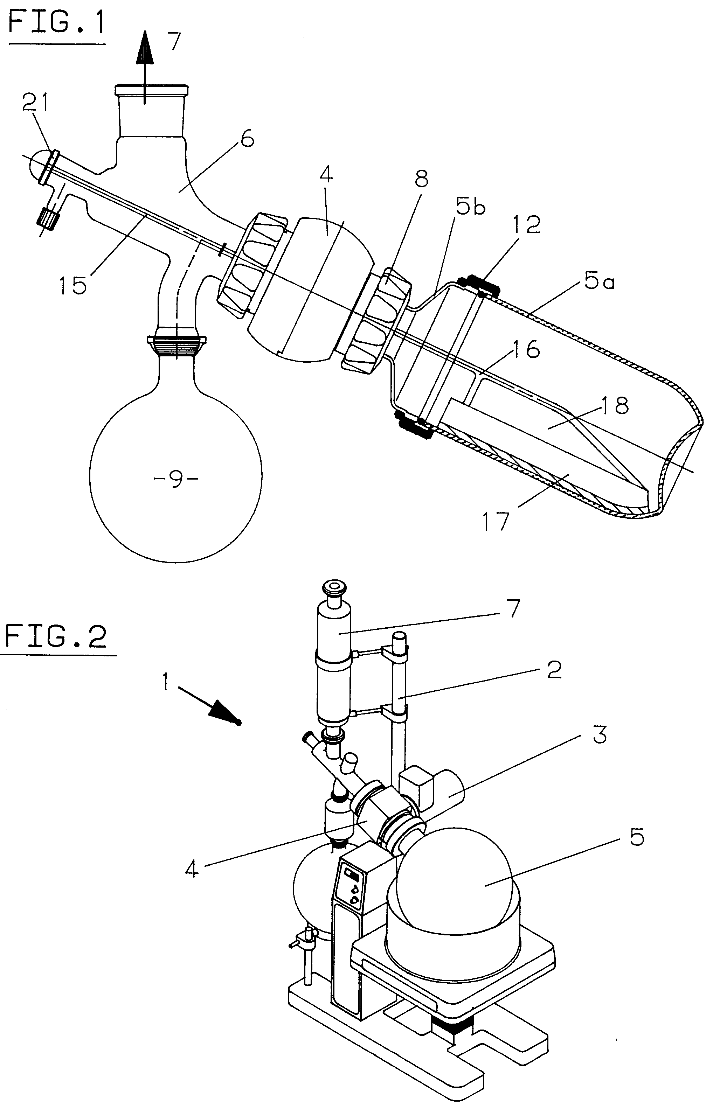

Figur 1 zeigt einen Verdampfer-Kolben 5 der mittels einer Schraubverbindung 8 mit einem Dampfführungs-Rohr 6 verbunden ist, welches einerseits an ein Auffang-Gefäss 9 und andererseits an einen Kühler 7 angeschlossen ist.

Figur 2 zeigt den Gesamtaufbau eines Rotationsverdampfers 1, wobei dort ein konventioneller Rundkolben 5 dargestellt ist. Der erfindungsgemässe Verdampfer-Kolben gemäss Figur 1 lässt sich unmittelbar anstelle eines konventionellen Verdampfer-Kolbens bei einer Anordnung gemäss Figur 2 einsetzen. Bei einer solchen Anordnung ist ein Stativteil 2 vorgesehen, an welchem ein Motor 3 befestigt ist, der über eine Halte- und Antriebseinrichtung 4 den Verdampfer-Kolben 5 antreibt. Durch das Antriebs-Teil 4 verläuft das Dampfführungs-Rohr 6 (Figur 1) durch welches der vom Kolben 5 aufsteigende Dampf in den Kühler 7 geleitet wird. Der Kühler 7 ist dabei in bekannter Weise stationär am Stativ 2 befestigt.

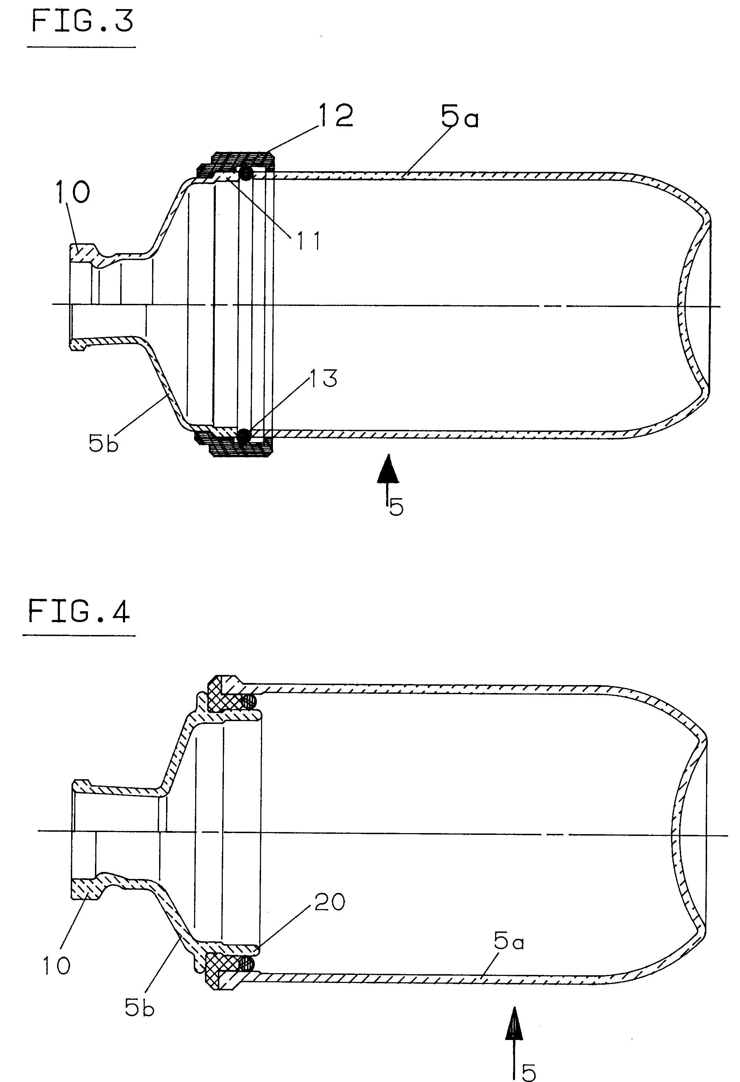

Wie aus Figur 1 und 3 ersichtlich ist, besteht der Verdampfer-Kolben 5 aus einem zylindrischen Becher-Teil 5a und einem Deckel-Teil 5b. Der Deckel-Teil 5b ist einerseits mit einem Flansch 10 versehen, durch welchen er mittels der Schraubverbindung 8 an der Antriebseinrichtung 4 befestigbar ist. Anderseits weist der Deckel-Teil 5b einen zweiten Flansch 11 auf, auf welchem ein Verbindungselement in Form eines Schraub-Rings 12 vorgesehen ist. Der Schraub-Ring 12 greift in ein entsprechendes Gewinde (nicht dargestellt) am Aussenrand des Becher-Teils 5a ein, so dass Deckel-Teil 5b und Becher-Teil 5a fest miteinander verschraubbar sind. Zur Abdichtung ist im Schraub-Ring 12 ein elastischer Dichtring 13 angeordnet, der beim Aufschrauben des Schraub-Rings 12 zwischen Deckel-Teil 5b und oberem Rand des Becher-Teils 5a in Dichtstellung zusammengepresst wird. Der Schraub-Ring 12 kann in bekannter Weise entweder mit einem durchgehenden Gewinde oder mit einem Bajonettgewinde oder einer anderen Art einer Anordnung zum formschlüssigen Verbinden von Becher-Teil 5a und Deckel-Teil 5b versehen sein.

Wie aus Figur 1 ersichtlich ist, ist im stationären Dampfführungs-Rohr 6 mittels einer Befestigungseinrichtung 21 eine Halterung 15 befestigt, die vom Dampfführungs-Rohr 6 umgeben wird und in den Kolben 5 hineinragt. An der Halterung 15 ist eine Anordnung 16 vorgesehen, mit der das im Kolben 5 befindliche Gut mechanisch beeinflusst werden kann. Ersichtlicherweise bleibt nämlich die Halterung 15 und damit die Anordnung 16 stationär, da sie am stationären Dampfführungs-Rohr 6 befestigt ist. Wenn dementsprechend der Kolben 5 im Betrieb rotiert, ergibt sich eine Relativbewegung zwischen dem im Kolben 5 befindlichen Gut und der Anordnung 16, so dass das Gut mechanisch beeinflussbar ist. Die Anordnung 16 trägt einen Schaber 17, der die Innenwand des Kolbens 5 im Betrieb konstant bestreicht und damit das im Kolben 5 befindliche Gut abstreift und auf der Kolbenwand verstreicht. Im oberen Bereich der Anordnung 16 ist ein Durchlass 18 vorgesehen, so dass die Anordnung 16 gleichzeitig als Rührwerk für das im Kolben 5 befindliche Gut wirkt.

Figur 4 zeigt ein abgewandeltes Ausführungsbeispiel eines Kolbens 5 mit Deckel-Teil 5b und Becher-Teil 5a. Dabei ist der Deckel-Teil 5b mit einer zylindrischen Verlängerung 20 versehen, die in den Becher-Teil 5a eingreift und dessen Wand im Öffnungsbereich von innen abstützt. Ersichtlicherweise ist eine derartige Anordnung im Hinblick auf grosse Unterdrucke besonders belastbar.

## Patentansprüche

1. Verdampfer-Kolben (5) für einen Rotationsverdampfer (1) der mittels eines Dampfführungs-Rohrs (6) mit einem Kondensator (7) verbindbar ist, wobei der Verdampfer-Kolben (5) unmittelbar oder mittelbar über das Dampfführungs-Rohr an einer Halte- und Antriebseinrichtung (4) befestigbar und von dieser in Drehbewegung versetzbar ist, dadurch gekennzeichnet, dass der Verdampfer-Kolben (5) als zweiteiliges Gefäss mit einem etwa zylindrischen Becher-Teil (5a) und einem Deckel-Teil (5b) ausgebildet ist, wobei der Deckel-Teil (5b) mit dem Dampfführungs-Rohr (6) verbunden ist.

2. Verdampfer-Kolben nach Anspruch 1, dadurch gekennzeichnet, dass der Deckel-Teil (5b) einen ersten Flansch (10) aufweist, mit welchem er an der Halte- und Antriebseinrichtung (4) befestigbar ist, und dass er einen zweiten Flansch (11) aufweist, mit welchem er mit dem Becher-Teil (5a) verbindbar ist.

3. Verdampfer-Kolben nach Anspruch 1 oder 2, dadurch gekennzeichnet, dass ein Dichtungselement (13) zwischen Deckel-Teil (5b) und Becher-Teil (5a) angeordnet ist.

4. Verdampfer-Kolben nach einem der vorangegangenen Ansprüche, dadurch gekennzeichnet, dass ein Verbindungselement (12) zum Verbinden von Deckel-Teil (5b) und Becher-Teil (5a) unter Vorspannung vorgesehen ist.

5. Verdampfer-Kolben nach einer der vorangegangenen Ansprüche, dadurch gekennzeichnet, dass im Becher-Teil (5a) eine Anordnung (16, 17, 18) zum mechanischen Beeinflussen des Füllguts vorgesehen ist.

6. Verdampfer-Kolben nach Anspruch 5, dadurch gekennzeichnet, dass die Anordnung (16, 17, 18) einen Schaber (17) zum Verstreichen oder zum Abstreifen von Rückständen auf der Becherwand aufweist.

7. Verdampfer-Kolben nach einem der Ansprüche 5 oder 6, dadurch gekennzeichnet, dass die Einrichtung (16, 17,18) als Rühreinrichtung ausgebildet ist.

8. Verdampfer-Kolben nach einem der Ansprüche 5 bis 7, dadurch gekennzeichnet, dass eine Halterung (15) vorgesehen ist, die vom Dampfführungs-Rohr (6) umgeben ist.

9. Rotations-Verdampfer gekennzeichnet durch einen zweiteiligen Verdampfer-Kolben (5a, 5b) nach einem der vorangegangenen Ansprüche.
